(19) Europäisches Patentamt
European Patent Office
Office européen des brevets

(11) **EP 2 193 414 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **08802421.1**

(22) Anmeldetag: **19.09.2008**

(51) Int Cl.:
*G05D 1/02* (2006.01)    *G08G 5/00* (2006.01)
*G08G 5/04* (2006.01)

(86) Internationale Anmeldenummer:
**PCT/EP2008/007915**

(87) Internationale Veröffentlichungsnummer:
**WO 2009/040064 (02.04.2009 Gazette 2009/14)**

(54) **VERFAHREN ZUR AUTOMATISCHEN VERMEIDUNG VON KOLLISIONEN EINES FAHRZEUGES MIT WEITEREN OBJEKTEN**

METHOD FOR AUTOMATICALLY AVOIDING COLLISIONS OF A VEHICLE WITH OTHER OBJECTS

PROCÉDÉ POUR ÉVITER AUTOMATIQUEMENT LES COLLISIONS ENTRE UN VÉHICULE ET D'AUTRES OBJETS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.09.2007 AT 14822007**

(43) Veröffentlichungstag der Anmeldung:
**09.06.2010 Patentblatt 2010/23**

(73) Patentinhaber: **Airbus Defence and Space GmbH 85521 Ottobrunn (DE)**

(72) Erfinder: **Naderhirn, Michael 4040 Linz (AT)**

(74) Vertreter: **Westphal, Mussgnug & Partner Patentanwälte mbB Werinherstrasse 79 81541 München (DE)**

(56) Entgegenhaltungen:
**EP-A1- 1 329 863    WO-A-97/47945**

- **GALDINO A, MUNOZ C, AYALA-RINCON M: "Formal Verification of an Optimal Air Traffic Conflict Resolution and Recovery Algorithm" 14TH INTERNATIONAL WORKSHOP, WOLLIC 2007, LECTURE NOTES IN COMPUTER SCIENCE, SPRINGER BERLIN / HEIDELBERG, [Online] Bd. 4576/2007, 4. Juli 2007 (2007-07-04), Seiten 177-188, XP002514138 Rio de Janeiro, Brazil Gefunden im Internet: URL:http://www.springerlink.com/content/y3 5w6hnqp3u13150/fulltext.pdf> [gefunden am 2009-02-09]**
- **BACH R. FARRELL C, ERZBERGER H: "An Algorithm for Level-Aircraft Conflict Resolution" NASA, TACTICAL ATM, [Online] 31. Mai 2007 (2007-05-31), XP002514139 Gefunden im Internet: URL:http://www.aviationsystemsdivision.arc .na sa.gov/publications/tactical/bach_05_07 .pdf> [gefunden am 2009-02-09]**
- **EBY M S ET AL: "Free flight separation assurance using distributed algorithms" IEEE AEROSPACE CONFERENCE PROCEEDINGS, XX, XX, Bd. 2, 6. März 1999 (1999-03-06), Seiten 429-441, XP002161370**

**Beschreibung**

Die Erfindung betrifft ein Verfahren zur automatischen Vermeidung von Kollisionen eines Fahrzeuges mit weiteren Objekten. Das Verfahren ist insbesondere für die automatische Vermeidung von Kollisionen durch unbemannte, steuerbare Fluggeräte mit anderen Fluggeräten oder mit feststehenden Hindernissen gut geeignet.

Es sind unterschiedliche Systeme zur Kollisionsvermeidung bekannt, insbesondere Systeme zur Vermeidung von Kollisionen zwischen Flugzeugen, die zum diesem Zwecke miteinander kommunizieren. Unter anderem wird in der Publikation Galdino, André L. et al: "Formal Verification of an Optimal Air Traffic Conflict Resolution and Recovery Algorithm", in: WoLLIC, LNCS 4576, S. 177-188, Springer Verlag Berlin Heidelberg 2007, ein Verfahren zur Berechnung einer Ausweichflugbahn für ein Flugzeug zur Auflösung eines Flugverkehrskonfliktes mit einem zweiten Flugzeug beschrieben. Dabei wird im Fall einer möglicherweise gefährlichen Annäherung an ein anderes Flugobjekt eine Ausweichrute vorgeschlagen, welche für die Berechnung vereinfacht als gerader Streckenabschnitt angenommen wird. Die geradlinige Ausweichroute, d.h. ein neuer Geschwindigkeitsvektor wird so berechnet, dass das Flugzeug den kreisförmig angenommenen Schutzbereich um das zweite Flugzeug herum innerhalb dessen kein anderes Flugobjekt gelangen soll, gerade tangiert. Randbedingungen dabei sind, dass Flughöhe und Geschwindigkeitsbetrag des eigenen Flugzeuges nicht geändert werden sollen, und dass im Sinne der Energieersparnis und der Pünktlichkeit von Linienflügen die Abweichung von der ursprünglichen Weglänge möglichst gering sein soll. Das System ist für die Anwendung bei Linienflügen gedacht und liefert unter der dabei gegebenen Voraussetzung, dass die Annäherung eines anderen Flugzeuges auf Grund von per Funk vom Boden oder vom anderen Flugzeug aus gesandten Flugdaten, relativ lange im Voraus bekannt ist, sehr gute Ergebnisse. Im Sichtflugbereich ist das System nicht praktikabel, da es auf Grund der Vereinfachung von als gerade angenommen Streckenteilen der Ausweichflugbahn bei Flugobjekten welche erst bei geringerer Distanz entdeckt werden, gefährlich ungenau ist. Es würde somit eine unverhältnismäßig weitblickende und damit teuere Sensorik für das sehr frühzeitige Erkennen und Peilen anderer Flugobjekte erfordern.

Es besteht ein Bedarf, ein Verfahren zur Steuerung eines Fahrzeuges bereitzustellen, welches das zuverlässige Ausweichen des Fahrzeuges an stillstehenden oder sich bewegenden, insbesondere nicht kooperativen Hindernissen vorbei unterstützt und innerhalb bestimmter Grenzen garantiert. Für das Erkennen von Hindernissen soll mit einer an Bord des Fahrzeuges befindlichen Sensorik mit relativ kleinem Sensorradius das Auslangen gefunden werden können. Die Gesamtkosten des Systems sollen gering sein.

Ein Beispiel der Erfindung betrifft ein Verfahren zur Steuerung der Bewegung eines Objektes zur Vermeidung von Kollisionen mit Hindernissen; das Verfahren weist folgendes auf: Erkennen von zumindest einem bewegten oder unbewegten Hindernis; Definieren eines sich mit dem Hindernis mitbewegenden Sicherheitsbereiches um das Hindernis herum, wobei ein Eindringen des Objektes in diesen vermieden werden soll; Detektieren, ob sich das Hindernis inklusive seinem Sicherheitsbereich auf einem Kollisionskurs mit dem Objekt befindet; Berechnen einer Ausweichbewegungsbahn am Hindernis vorbei derart, dass die Ausweichbewegungsbahn zumindest annähernd kreisbahnförmig verläuft und diese oder eine tangential an diese verlaufende Gerade den Sicherheitsbereich um das Hindernis tangiert; Ansteuern des Objektes derart, dass es zumindest annähernd der berechneten Ausweichbewegung folgt, wobei die berechnete Ausweichbewegung tangential an die bisherige Bewegung des Objektes anschließt.

Die folgenden Figuren und die weitere Beschreibung soll helfen, die Erfindung besser zu verstehen. Nähere Details, Varianten und Weiterentwicklungen des Erfindungsgedankens werden an Hand von Figuren zu ausgewählten Spezialfällen der Bewegungen des eigenen Flugobjektes und eines Hindernisses erläutert. Die Elemente in den Figuren sind nicht unbedingt als Einschränkung zu verstehen, vielmehr wird Wert darauf gelegt, das Prinzip der Erfindung darzustellen. In den Figuren bezeichnen gleiche Bezugszeichen korrespondierende Teile. In den Skizzen ist das eigenes Fahrzeug jeweils als stilisiertes Flugzeug dargestellt.

Fig. 1 veranschaulicht die Platz- und Geschwindigkeitsverhältnisse bei einem feststehenden, als punktförmig angenommenen Hindernis, welches sich vor dem eigenen Fahrzeug genau in dessen Bewegungsrichtung befindet und im letzten Augenblick erkannt wird, an dem noch ein bestimmungsgemäßes Ausweichmanöver möglich ist.

Fig. 2 veranschaulicht die Verhältnisse wie in Fig. 1 mit dem Unterschied, dass das Hindernis schon früher erkannt wird.

Fig. 3 veranschaulicht die Platz- und Geschwindigkeitsverhältnisse bei mehreren feststehenden Hindernissen.

Fig. 4 veranschaulicht die Platz- und Geschwindigkeitsverhältnisse wenn sich in der Bewegungsrichtung des eigenen Fahrzeuges, vor diesem ein Hindernis mit langsamerer Geschwindigkeit in der gleichen Richtung bewegt, und wenn dieses im letzten Augenblick erkannt wird, an dem noch ein bestimmungsgemäßes Ausweichmanöver möglich ist.

Fig. 5    veranschaulicht die Verhältnisse wie in Fig. 4 an Hand einer vereinfachenden Überlegung für eine Näherungsrechnung.

Im folgenden wird das erfindungsgemäß gesteuerte Fahrzeug kurz als "eigenes Fahrzeug" bezeichnet. Der Bereich in welchem sich das eigene Fahrzeug bewegen kann und in welchem auch Hindernisse vorkommen können, wird vereinfacht als horizontale Fläche angenommen.

In einem Beispiel des erfindungsgemäßen Verfahrens wird von folgenden Gegebenheiten ausgegangen:

- Es wird angenommen, dass die Entfernung zu Hindernissen einen bestimmten Mindestabstand nicht unterschreiten darf. Um kleinere lokale Hindernisse herum kann ein kreisförmiger Sicherheitsbereich angenommen werden, in welchen das eigene Fahrzeug nicht eindringen darf.

- Der Flächenbereich in welchen sich das eigene Fahrzeug in nächster Zeit bewegen kann und in welchem in nächster Zeit Hindernisse auftauchen können, auf welche reagiert werden muss, wird mit Hilfe einer bordeigenen Sensorik zwecks Entdecken und Peilen von eventuellen Hindernissen ständig überwacht.

- Im Fall des Erkennens eines Hindernisses wird eine Ausweichbahn des eigenen Fahrzeuges an dem Hindernis vorbei berechnet. Diese Ausweichbahn ist aus einem Kreisbogen und eventuell aus einem Geradenstück zusammengesetzt, wobei das Geradenstück tangential an den Kreisbogen anschließt und der Kreisbogen tangential an die Bewegungsbahn des eigenen Fahrzeuges vor dem Start des Ausweichmanövers anschließt. Der gedachte Radius des Kreisbogens entspricht einem kleinen, bei der jeweiligen Geschwindigkeit nach oben hin garantiert einhaltbaren Krümmungsradius der Fahrbahn des eigenen Fahrzeuges.

- Das eigene Fahrzeug wird spätestens dann automatisch gesteuert und zwar entsprechend der vorausberechneten Ausweichbahn, wenn anderenfalls ein Eindringen des eigenen Fahrzeuges in den Sicherheitsbereich um ein erkanntes Hindernis nicht mehr vermeidbar ist.

Der erforderliche Sensorradius $R_{Sense}$ (Sensorreichweite) um einem Hindernis H bestimmungsgemäß ausweichen zu können, ist bei allen betrachteten Fällen von der Geschwindigkeit des eigenen Fahrzeuges A und dem Radius k des gekrümmten Bereiches der Ausweichbewegungsbahn des eigenen Fahrzeuges A abhängig. An Hand von geometrischen Überlegungen und daraus resultierenden mathematischen Ansätzen kann für die jeweiligen Fälle die erforderliche Mindestreichweite des Sensors errechnet werden um ein sicheres Ausweichen garantieren zu können.

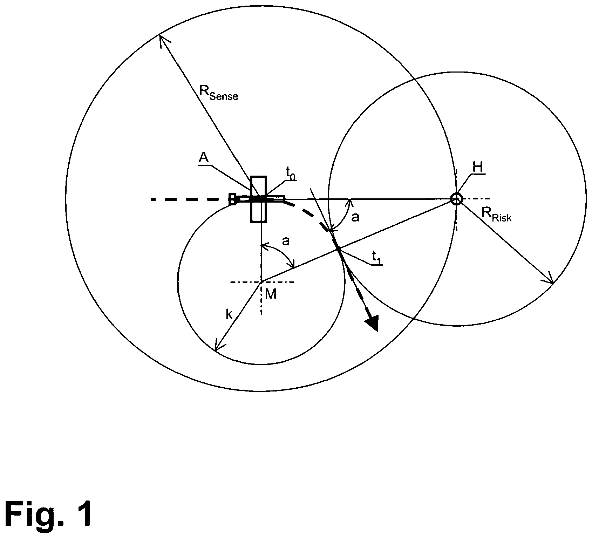

Für den Fall gemäß Fig. 1 ist der Sensorradius $R_{Sense}$ für ein geradeaus liegendes Hindernis H:

$$R_{Sense} \geq (k + R_{Risk}) \cdot \sin(a),$$

wobei gilt: a = arccos (k/ (k+ $R_{Risk}$)

Die Formel ist gleichbedeutend mit: $R_{Sense} \geq \sqrt{R_{Risk}^2 + 2 \cdot k \cdot R_{Risk}}$

Dabei ist:

$R_{Sense}$    die Reichweite jenes Sensors des eigenen Fahrzeuges A, welcher automatisch fremde Objekte (z.B. Hindernis H) detektiert,

$R_{Risk}$    der Radius des kreisförmigen Sicherheitsbereiches, also der einzuhaltende Mindestabstand um das punktförmig angenommene Hindernis H, und

k    der Radius jenes für die Berechnung angenommenen Kreisabschnittes, den das eigene Fahrzeug A im Berechnungsmodell fährt, um von der ursprünglichen Bahn zu einer Bahn abzuweichen, welche in passendem Mindestabstand $R_{Risk}$ an dem erkannten Hindernis H vorbei führt. Im Folgenden wird dieser Radius kurz "Ausweichbahnradius" genannt.

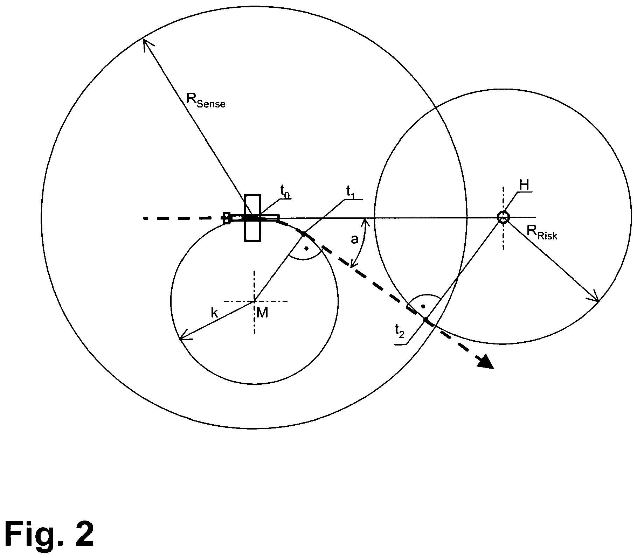

Im Fall gemäß Fig. 2 wird das in der Bewegungsbahn liegende Hindernis H relativ zum eigenen Ausweichbahnradius früher erkannt. Das führt natürlich zu einem kleineren erforderlichen Winkel a über den sich der gekrümmte Abschnitt der Ausweichbahn erstrecken muss. Bei der Ausweichbahn wird so lange ein Bogen geflogen, bis die Gerade in Bewegungsrichtung (d.h. die Tangente an die Ausweichbahn) den Kreis mit Sicherheitsradius $R_{Risk}$ um das Hindernis tangiert.

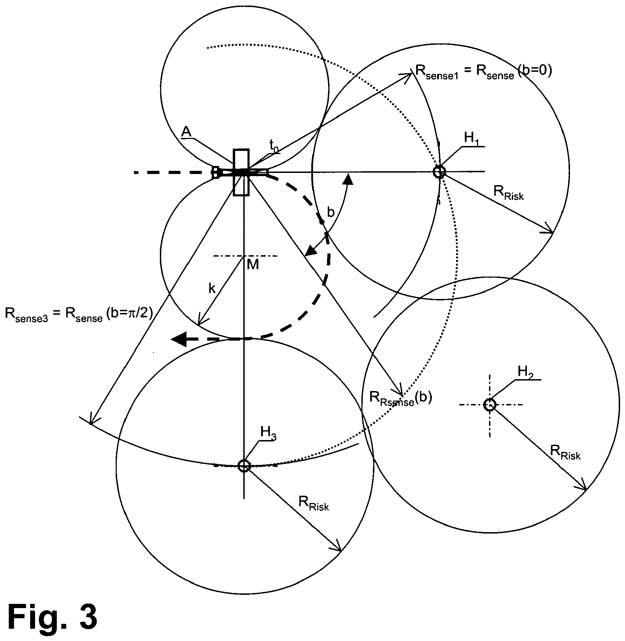

Fig. 3 zeigt eine Grenzsituation bei gleichzeitiger Anwesenheit mehrerer stillstehender Hindernisse $H_1$, $H_2$ und $H_3$. Unter der Voraussetzung, dass das eigene Fahrzeug A einem direkt davor liegenden Hindernis ($H_1$) immer nach rechts ausweichen können muss - was zumeist gesetzlich vorgegeben ist -, ergibt sich sehr anschaulich, dass der Sensorradius gegenüber einem 90° rechts liegenden, feststehenden Hindernis $H_3$ mindestens gleich der Summe aus Mindestabstand $R_{Risk}$ und dem zweifachen Ausweichbahnradius k der eigenen, zum Ausweichen eingeschlagenen Flugbahn sein muss ($R_{Sense}$ = Risk + 2k). In punktierter Linie ist eingezeichnet, in welchem, von der Winkellage b bezüglich der Bewegungsrichtung abhängigen Abstand $R_{Sense}$(b) vom eigenen Fahrzeug A feststehende Hindernisse erkannt werden müssen, damit noch ein bestimmungsgemäßes Ausweichen möglich ist. Diese Linie ist eine Kreislinie um den Mittelpunkt M des Kreissegmentes (strichlierte Linie) der eigenen Ausweichbewegung.

Gemäß Fig. 3 gibt der Winkel b die Winkelabweichung der Verbindungslinie zwischen Hindernis und eigenem Fahrzeug von der Bewegungsrichtung des eigenen Fahrzeuges an. So ist z.B. für das Hindernis $H_1$ der Winkel b gleich 0 rad und für das Hindernis $H_3$ der Winkel b gleich $\pi/2$ rad (90°). Liegt dabei besagte Verbindungsrichtung rechts von der Bewegungsrichtung so ist b positiv. Damit kann der erforderliche Mindestsensorradius $R_{Sense}$(b) bei stillstehenden Hindernissen in Abhängigkeit vom Winkel b, vom Ausweichbahnradius k und vom Mindestabstand $R_{Risk}$ entsprechend folgender Formel errechnet werden:

$$R_{Sense}(b) \geq \sqrt{(R_{Risk}+k)^2 - k^2 \cdot \cos^2(b)} + k \cdot \sin(b)$$

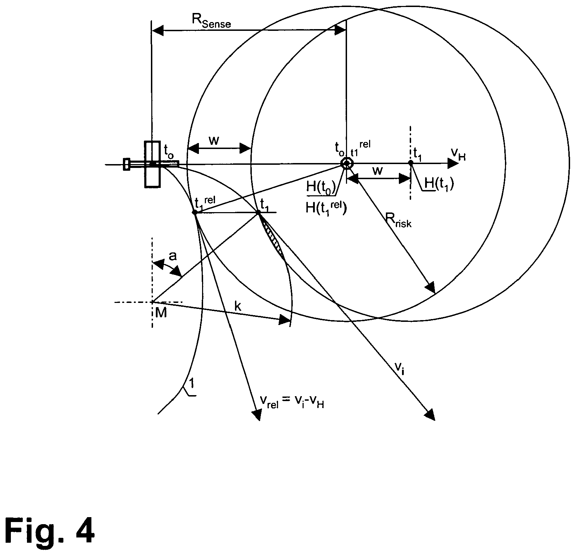

Fig. 4 veranschaulicht einen Grenzfall eines idealen Ausweichmanövers, wenn sich in der Richtung der Bewegung des eigenen Fahrzeuges A vor diesem ein (als punktförmig angenommenes) fremdes Fahrzeug (d.h. Hindernis H) mit langsamerer Geschwindigkeit $v_H$ als das eigene Fahrzeug A in der gleichen Richtung wie dieses bewegt und wenn dabei dieses fremde Fahrzeug H im letzten Augenblick erkannt wird, an dem gerade noch ein bestimmungsgemäßes Ausweichmanöver möglich ist.

Die Kurve 1 stellt dabei die in Wirklichkeit kreisbogenförmige Ausweichkurve des eigenen Fahrzeuges A in jenem relativen Bezugsystem dar, in welchem das Hindernis H als stillsteht. Dementsprechend ist der wirklichen Bewegungsbahn des eigenen Fahrzeuges A die entgegengesetzte, tatsächliche - hier konstant lineare - Bewegung $v_H$ des Hindernisses H überlagert. Zum Zeitpunkt $t_0$ wird das Hindernis H entdeckt. Zum Zeitpunkt $t_1$ tangiert die relative Ausweichbahn des eigenen Fahrzeuges A den kreisförmigen Sicherheitsbereich mit Risikoradius $R_{Risk}$ des Hindernisses H. Zwischen den Zeitpunkten $t_0$ und $t_1$ bewegt sich das Hindernis H um die lineare Strecke w weiter (in Fig. 4 von links nach rechts) und das eigene Fahrzeug A im Kreisbogen mit dem Ausweichbahnradius k um den Winkel a.

Das Gleichungssystem, mit dem für diesen Fall den erforderlichen Mindestsensorradius $R_{Sense}$ ist im Allgemeinen nicht geschlossen nach $R_{Sense}$ lösbar, da es nach Elimination aller weiteren Unbekannten zu einem Polynom vierter Ordnung der letzten unbekannten Variable ($R_{Sense}$) führt. Datentechnisch kann man es natürlich lösen, beispielsweise indem man sowohl für die Kurve 1, als auch für die Kreislinie mit dem erforderlichen Mindestabstandes $R_{Risk}$ um das Hindernis H herum eine diese Kurven beschreibende Folge von Wertepaaren aus Normalabstand zur ursprünglichen Achsrichtung des eigenen Fahrzeuges A und Richtung der Kurve errechnet und aus diesen beiden Folgen jene beiden Wertepaare herausfiltert, bei denen sowohl besagter Normalabstand als auch besagte Richtung übereinstimmen. Beim idealen Ausweichmanöver tangieren sich die beiden Kurven bei diesen Werten, womit auf den Abstand des eigenen Fahrzeuges A zum Hindernis H in Richtung der ursprünglichen Bewegungsachse des eigenen Fahrzeuges rückgeschlossen werden kann, und davon weiter auf den mindestens erforderlichen Sensorradius $R_{sense}$.

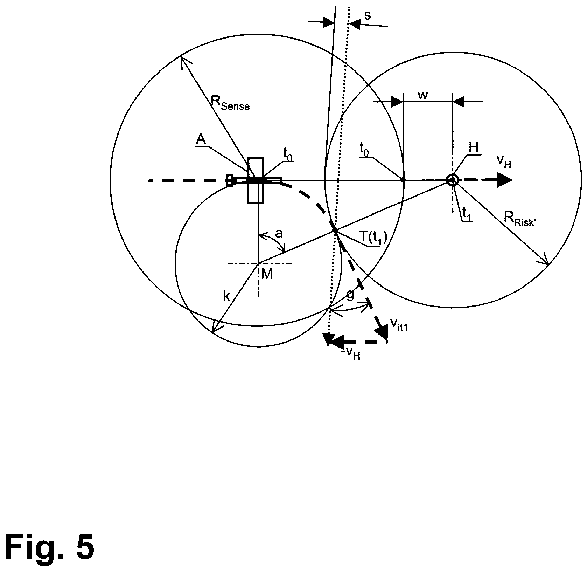

Fig. 5 veranschaulicht ein Modell, mit Hilfe dessen die Berechnung des erforderlichen Ausweichmanövers gemäß Fig. 4 einfacher und mit durchaus ausreichender Näherung auch durchgeführt werden kann. Es wird dazu vorerst jener Punkt berechnet, an welchem das eigene Fahrzeug A am Ende des gekrümmten Abschnittes seiner Ausweichbahn den kreisförmigen Sicherheitsbereich mit dem Radius $R_{Risk}$ um das Hindernis in der in Fig. 5 dargestellten Weise tangieren (Tangentialpunkt $T(t_1)$) würde, wenn dieser genau zum Zeitpunkt der Berührung still stehen bleiben würde. Bei den diesbezüglichen geometrischen Berechnungen geht man davon aus, dass sich in der Zeit, welche das eigene Fahrzeug A zum Durchlaufen des gekrümmten Abschnittes seiner Ausweichbahn benötigt, auch das Hindernis H linear weiterbewegt. Der Abstand zwischen eigenem Fahrzeug A und bewegtem Hindernis H zum Zeitpunkt $t_0$, also dann wenn von der ursprüngliche Fahrtrichtung abgewichen und die gekrümmte Ausweichbahn eingeschlagen wird, entspricht in erster Näherung dem mindestens erforderlichen Sensorradius. Für diesen kann folgende Formel hergeleitet werden:

$$R_{Sense} = (k+R_{Risk}) \cdot \sin(a) - (v_H/v_i) \cdot k \cdot a \qquad (1)$$

wobei gilt:

$$a = \cos^{-1}(k/(R_{Risk}+k))$$

Dabei ist $v_H$ die Geschwindigkeit des Hindernisses H und $v_i$ die Geschwindigkeit des eigenen Fahrzeuges.

Diese Formel ist deshalb nur eine Näherung, da sich mit dem Hindernis H natürlich auch dessen Sicherheitsbereich mit Radius $R_{Risk}$ mitbewegt. Daher tangiert das eigene Fahrzeug zum Zeitpunkt $t_1$ den Sicherheitsbereich nicht, sondern es kreuzt seine Außengrenze. Die Winkelabweichung von der Tangentialrichtung ist gleich dem Winkelunterschied g zwischen dem Geschwindigkeitsvektor der Bewegung des eigenen Fahrzeuges zum Zeitpunkt $t_1$ einerseits und dem um den Geschwindigkeitsvektor $v_H$ der Bewegung des Hindernisses verminderten Geschwindigkeitsvektor der Bewegung des eigenem Fahrzeuges andererseits. Das in Fig. 5 eingezeichnete Maß s, gibt an, wie weit das eigene Fahrzeug dadurch bei linearer Bewegung in den Sicherheitsbereich um das Hindernis eindringt, bzw. bei zum Fahrzeug gleichgerichteter Bewegung des Hindernisses vorher schon eingedrungen ist.

Besagter Winkelunterschied g kann einfach mit Hilfe des vektoriellen Skalarproduktes berechnet werden.

$$\cos(g) = \frac{\vec{V_{it1}} \cdot (\vec{V_{it1}} - \vec{V_H})}{\left|\vec{V_{it1}}\right| \cdot \left|\vec{V_{it1}} - \vec{V_H}\right|} \quad \text{und} \quad s = R_{Risk} \cdot (1 - \cos(g))$$

womit gilt:

$$s = R_{Risk} \cdot \left(1 - \frac{\vec{V_{it1}} \cdot (\vec{V_{it1}} - \vec{V_H})}{\left|\vec{V_{it1}}\right| \cdot \left|\vec{V_{it1}} - \vec{V_H}\right|}\right) \tag{2}$$

Da mit obiger Formel (1) der annäherungsweise richtige Sensorradius Rsense und Formel (2) das zugehörige Korrekturmaß s einfach zu berechnen sind, ist es sehr vorteilhaft, im Fall von bewegten Hindernissen für die Steuerung und für die Berechnung der erforderlichen Mindest-Sensorreichweite mit obiger Formel 1 zu arbeiten und dabei einen gegenüber dem tatsächlichen Wert erhöhten Sicherheitsabstand $R_{Risk'}=R_{Risk}+s$ einzusetzen, welcher mit Hilfe der Formel (2) berechnet wird. $v_{it1}$ bezeichnet die Geschwindigkeit $v_i$ des eigenen Fahrzeuges zum Zeitpunkt $t_1$ der tangentialen Berührung von Ausweichbahn und Sicherheitsbereich.

Diese Näherungsmethode - Berechnung einer "quasistationären tangentialen Berührung des Risikobereiches" einerseits und "Zugabe der gemäß Formel (2) berechneten damit verbundenen Eindringtiefe (2) zum erforderlichen Mindest-Sicherheitsabstand" für die Rechnung, führt auch ganz allgemein bei Hindernissen, welche sich nicht auf der ursprünglichen Bewegungslinie des eigenen Fahrzeuges bewegen zu sehr guten Ergebnissen. Diese Näherungsmethode ist zudem kongruent mit schon weiter oben für nicht bewegte Hindernisse angeführten Berechnungsmethoden.

Das Steuern des eigenen Fahrzeuges A im Umfeld eines Hindernisses H erfolgt selbstverständlich nicht durch einmaliges Bemerken eines Hindernisses und dementsprechend einmaliges Einstellen einer Ausweichbahn. In einer sich ständig wiederholenden Abfolge von Schritten wird im Bereich des durch die eigene Geschwindigkeit und die mögliche Höchstgeschwindigkeit von potentiellen Hindernissen gegebenen Mindest-Sensorbereiches $R_{Sense}$ nach Hindernissen gespürt. Wird ein Hindernis in einer solchen Nähe der prognostizierten eigenen Bewegungsbahn festgestellt, welche geringer ist als der Sicherheitsabstand, so wird eine passende geänderte Bewegungsbahn errechnet und eingestellt. Parallel dazu wird weiter nach Hindernissen gefühlt. Wird das dabei zuvor gepeilte Hindernis in einer veränderten Lage oder Geschwindigkeit festgestellt, so wird die eigene Bewegungsbahn wiederum geändert usw., bis die eigene Bewegungsbahn in genügend großem Abstand am Hindernis vorbei führt.

Mit bekannten Verfahren zur automatisierten Warnung und/oder Vermeidung vor bzw. von Kollisionen hat das vorliegende Verfahren gemeinsam, dass für die Zeiten, welche vom Eindringen eines Hindernisses in einem interessierenden, relevanten Entfernungsbereich über die Identifizierung und Peilung durch den eigenen Sensor, die Entscheidung über die Art einer Ausweichbahn, Ansteuerung und Bewegung der notwendwendigen Stellorgane um den Kurs des Fahrzeuges zu ändern etc. anfallen, Sicherheitszugaben einzukalkulieren sind. Ebenso hat das vorliegende Verfahren mit bekannten Verfahren gemeinsam, dass bei der Anwendung für im Weltraum schwebende, in der Atmosphäre fliegende oder in Wasser tauchende eigene Fahrzeuge zusätzlich zur Überwachung in der eigenen Bewegungsebene noch mehr oder minder weit die Überwachung von nahen parallelen Ebenen und von mehr oder minder stark dazu geneigten, die eigene Position schneidenden, möglichen Bewegungsebenen anderer Objekte durchzuführen ist. Insbesondere kann die der Projektion von Position und Geschwindigkeit eines erkannten Hindernisses in die Ebene der Bewegung des eigenen Fahrzeuges berechnet werden und das weitere Verfahren mit den projizierten Daten weitergeführt werden. Die Ausweichbewegungsbahn unter wird also unter Verwendung der projizierten Geschwindigkeit und Position berechnet.

Das vorliegende Verfahren ist unabhängig davon, entsprechend welcher Methode nach einem bestimmungsgemäßen Ausweichvorgang wieder auf eine zum ursprünglichen Ziel führende Bahn eingeschwenkt wird, weswegen hier auch darauf nicht weiter eingegangen wird.

Das vorliegende Verfahren zur automatischen Kollisionsvermeidung kommt bei hoher Sicherheit der Vermeidung von Kollisionen durch die gute Übereinstimmung des berechneten Kurses mit dem tatsächlich gefahren Kurs mit hervorragend geringen pauschalen Sicherheitszugaben räumlicher Natur aus. Auf Grund der einfachen Berechnungsvorgänge kommt es auch bei geringem Hardwareaufwand mit sehr geringen Sicherheitszugaben zeitlicher Natur aus. Das vorliegende Verfahren kann mit sehr geringem Aufwand zur Anwendung an verschiedenen Fahrzeugen adaptiert werden. Neben der Abstimmung auf die jeweiligen Stellelemente ist für die optimale Funktion nur wichtig, dass die richtige, von Fahrzeugtyp zu Fahrzeugtyp variierende Funktion des nach oben hin garantiert einzuhaltenden Ausweichbahnradius k in Abhängigkeit von der jeweiligen Geschwindigkeit hinterlegt wird.

Anzumerken ist weiters, dass das vorliegende Verfahren klare Vorgaben für die erforderliche Sensorreichweite liefert, wenn eigene Geschwindigkeit und maximale mögliche Geschwindigkeit von bewegten Hindernissen gegeben sind, bzw. umgekehrt eine maximal zulässige eigene Geschwindigkeit klar vorgeben kann, wenn von einer gegebenen Sensorreichweite und von bekannten Höchstgeschwindigkeiten möglicher Hindernisse ausgegangen werden kann.

Im Anschluss werden noch einmal beispielhaft, wichtige Aspekte der Erfindung zusammengefasst. Die folgende Aufzählung ist jedoch nur beispielhaft und weder vollständig noch umfassend.

Ein Beispiel der Erfindung bezieht sich auf ein Verfahren zur Steuerung eines steuerbaren beweglichen Objektes zwecks automatisierter Vermeidung von Kollisionen des Objektes mit bewegten Hindernissen. Dabei wird um bewegte Hindernisse herum ein Sicherheitsbereich angenommen, in den das bewegliche Objekt nicht eindringen darf, und im Fall des Vorhandenseins eines zumindest mit seinem Sicherheitsbereich zum beweglichen Objekt auf Kollisionskurs befindlichen, bewegten Hindernisses durch eine Steuerlogik eine Ausweichbewegung des beweglichen Objektes an dem Hindernis vorbei berechnet. Des weiteren schließt dabei die berechnete Ausweichbewegung kreisbogenförmig tangential an die Bewegungsbahn des beweglichen Objektes vor dem Start des Ausweichmanövers an und das bewegliche Objekt wird durch Einwirkung einer Steuerlogik auf die Stellelemente des beweglichen Objektes automatisch auf eine die berechnete Ausweichbewegung zumindest annähernde, tatsächliche Ausweichbewegung gebracht, wobei die berechnete Ausweichbewegung die mit dem bewegten Hindernis mitbewegte Grenze des nicht zu durchfahrenden Sicherheitsbereiches um dieses Hindernis herum tangiert.

Die berechnete Ausweichbewegung kann im Anschluss an den Kreisbogen ein tangential daran anschließendes Geradenstück beinhalten, und die Bahngeschwindigkeit der berechneten Ausgleichsbewegung kann als konstant angenommen werden. Der Sicherheitsbereich um das bewegte Objekt kann als kreisförmig angenommen werden.

Bei einem Beispiel des erfindungsgemäßen Verfahrens wird zur Berechnung der Ausweichbewegung eine erste Kurve berechnet, indem von der Lage des bewegliches Objektes zu Beginn des Ausweichmanövers aus von der Bewegung des beweglichen Objektes entlang eines Kreisbogens die gleichzeitige Bewegung des Hindernisses vektoriell subtrahiert wird und indem eine zweiten Kurve berechnet wird, welche gleich der Grenze des Sicherheitsbereiches um das Hindernis zum Zeitpunkt des Beginnes des Ausweichmanövers ist und indem weiters der erste auf der ersten Kurve befindliche Punkt berechnet wird, welcher eine gemeinsame Tangente mit einem Punkt auf der zweiten Kurve aufweist.

Bei einem weiteren Beispiel des erfindungsgemäßen Verfahrens wird zur Berechnung der Ausweichbewegung des beweglichen Objektes in einem ersten Schritt unter jener Annahme von einer tangentialen Berührung des Sicherheitsbereiches um das bewegte Hindernis davon ausgegangen, dass der Sicherheitsbereich genau zum Zeitpunkt der Berührung mit der Ausweichbahn als stillstehend angenommen wird. In einem zweiten Schritt wird eine Gerade angenommen, welche sich aus der Verlängerung jenes Vektors ergibt, welcher durch Subtraktion des Geschwindigkeitsvektors des Hindernisses vom Geschwindigkeitsvektor des bewegten Objektes zum Zeitpunkt besagter angenommener tangentialer Berührung gebildet wird. In einem dritten Schritt wird berechnet, wie sehr die in dem zweiten Schritt berechnete Gerade als Sehne in den zum Zeitpunkt der Berührung mit der Bewegungsbahn als stillstehend angenommenen Sicherheitsbereich um das bewegliche Objekt eindringt, und in einem vierten Schritt wird die Berechnung vom ersten Schritt wiederholt, wobei allerdings der als stillstehend angenommene Sicherheitsbereich gegenüber dem ersten Schritt um einen umlaufenden Streifen als vergrößert angenommen wird, dessen Breite gleich dem in dem dritten Schritt berechneten Maß ist.

Des Weiteren kann bei Bewegungsbahnen von Hindernissen, welche sich von oben oder von unten an das bewegte Objekt annähern, die Projektion in die Bewegungsebene des bewegten Objektes betrachtet werden und dieser Projektion gemäß dem oben beschriebenen Verfahren entsprechend ausgewichen werden.

**Patentansprüche**

1.  Ein Verfahren zur Steuerung der Bewegung eines Objektes (A) zur Vermeidung von Kollisionen mit Hindernissen (H); das Verfahren weist folgendes auf:

    Erkennen von zumindest einem bewegten oder unbewegten Hindernis (H);
    Definieren eines sich mit dem Hindernis (H) mitbewegenden Sicherheitsbereiches ($R_{RISK}$) um das Hindernis (H) herum;
    Detektieren, ob sich das Hindernis (H) inklusive seinem Sicherheitsbereich ($R_{RISK}$) auf einem Kollisionskurs mit dem Objekt (A) befindet;
    Berechnen einer Ausweichbewegungsbahn am Hindernis (H) vorbei derart, dass die Ausweichbewegungsbahn zumindest annähernd kreisbahnförmig verläuft und diese annähernd kreisbahnförmige Ausweichbewegungsbahn den Sicherheitsbereich ($R_{RISK}$) um das Hindernis (H) tangiert;
    Berechnen eines für ein Ausweichen mindestens erforderlichen Abstandes des Objektes (A) vom Hindernis (H);
    Ansteuern des Objektes (A) bei dem mindestens erforderlichen Abstand zum Hindernis (H) derart, dass es zumindest annähernd der berechneten Ausweichbewegung folgt, wobei die berechnete Ausweichbewegung tangential an die bisherige Bewegung des Objektes anschließt,

    **dadurch gekennzeichnet, dass** das Berechnen der Ausweichsbewegungsbahn folgende Schritte umfasst:

    [A] es wird unter jener Annahme von einer tangentialen Berührung des Sicherheitsbereiches ($R_{RISK}$) um das bewegte Hindernis (H) davon ausgegangen, dass der Sicherheitsbereich genau zum Zeitpunkt ($t_1$) der Berührung mit der Ausweichbahn als stillstehend angenommen wird,
    [B] es wird eine Gerade angenommen, welche sich aus der Verlängerung jenes Vektors ergibt, welcher durch Subtraktion des Geschwindigkeitsvektors ($v_H$) des Hindernisses (H) vom Geschwindigkeitsvektor ($v_i$) des bewegten Objektes (A) zum Zeitpunkt besagter angenommener tangentialer Berührung gebildet wird,
    [C] es wird jene Länge (s) berechnet, welche die aus Schritt B berechnete Gerade als Sehne in den zum Zeitpunkt ($t_1$) der Berührung mit der Bewegungsbahn als stillstehend angenommenen Sicherheitsbereich ($R_{RISK}$) um das Hindernis (H) eindringt,
    [D] Wiederholen der Berechnung aus Schritt A, wobei allerdings der als stillstehend angenommene Sicherheitsbereich ($R_{RISK}$) gegenüber Schritt A um einen umlaufenden Streifen als vergrößert angenommen wird, dessen Breite gleich dem in Schritt C berechneten Länge (s) ist.

2.  Das Verfahren nach Anspruch 1, das weiter folgendes umfasst:

    Ansteuern des Objektes (A) derart, dass es, sobald es den Tangentialpunkt am Sicherheitsbereich um das Hindernis (H) passiert, einem Kurs folgt, der zumindest eine bestimmte Zeit lang geradlinig verläuft und tangential an die Ausweichbewegungsbahn anschließt.

3.  Das Verfahren nach Anspruch 1 oder 2, bei dem für die Berechnung der Ausweichbewegungsbahn die Geschwindigkeit des Objektes (A) als konstant angenommen wird.

4.  Das Verfahren nach einem der Ansprüche 1 bis 3, bei dem
    das Berechnen der Ausweichbewegungsbahn folgendes umfasst:

    Berechnen einer ersten Kurve (1),

    - indem von der Lage des bewegliches Objektes (A) zu Beginn ($t_0$) des Ausweichmanövers aus von der Bewegung des beweglichen Objektes (A) entlang eines Kreisbogens die gleichzeitige Bewegung ($v_H$) des Hindernisses (H) vektoriell subtrahiert wird und
    - indem eine zweiten Kurve berechnet wird, welche gleich der Grenze des Sicherheitsbereiches ($R_{RISK}$) um das Hindernis (H) zum Zeitpunkt des Beginnes des Ausweichmanövers ist, und
    - indem weiters der erste auf der ersten Kurve befindliche Punkt berechnet wird, welcher eine gemeinsame Tangente mit einem Punkt auf der zweiten Kurve aufweist.

5.  Das Verfahren nach einem der vorhergehenden Ansprüche, wobei der Sicherheitsbereich ($R_{RISK}$) um das Hindernis (H) kreisförmig ist.

**6.** Verfahren nach einem der vorhergehenden Ansprüche, bei dem der Schritt D folgendes umfasst:

Berechnen der Vergrößerung s des Radius des Sicherheitsbereiches unter Zuhilfenahme der Formel

$$s = R_{Risk} \cdot \left(1 - \frac{\vec{V}_{it1} \cdot (\vec{V}_{it1} - \vec{V}_H)}{|\vec{V}_{it1}| \cdot |\vec{V}_{it1} - \vec{V}_H|}\right),$$

wobei $R_{Risk}$ dem Radius des Sicherheitsbereiches um das Hindernis entspricht, $v_{it1}$ der vektoriellen Geschwindigkeit des Fahrzeuges unmittelbar nach dem Durchlauf des kreisbogenförmigen Bewegungsteiles und $v_H$ der vektoriellen Geschwindigkeit des bewegten Hindernisses.

**7.** Das Verfahren nach einem der vorhergehenden Ansprüche, das weiter folgendes umfasst:

ständiges Überwachen des am bewegten Objekt (A) angrenzenden Flächenbereichs mit Hilfe einer bordeigenen Sensorik, um eventuelle Hindernisse (H) zu entdecken und zu peilen.

**8.** Das Verfahren nach einem der vorhergehenden Ansprüche, das weiter folgendes umfasst:

Berechnen der Projektion von Position und Geschwindigkeit ($v_H$) eines erkannten Hindernisses (H) in die Ebene der Bewegung des Objektes;
Berechnen der Ausweichbewegungsbahn unter Verwendung der projizierten Geschwindigkeit und Position.

**9.** Das Verfahren nach einem der Ansprüche 1 bis 8, bei dem das Objekt (A) ein Flugzeug ist.

**10.** Das Verfahren nach einem der Ansprüche 1 bis 8, bei dem das Objekt (A) ein U-Boot ist.

**11.** Das Verfahren nach einem der Ansprüche 1 bis 8, bei dem das Objekt (A) ein Weltraumfahrzeug ist.

**12.** Das Verfahren nach einem der Ansprüche 1 bis 8, bei dem das Objekt (A) ein Schiff ist.

**13.** Das Verfahren nach einem der Ansprüche 1 bis 8, bei dem das Objekt (A) ein Landfahrzeug ist.

**Claims**

**1.** A method for controlling the movement of an object (A) for avoiding collisions with obstacles (H); the method comprising:

recognizing at least one moving or stationary obstacle (H);
defining a security sector ($R_{RISK}$) around the obstacle (H) moving along the obstacle (H);
detecting whether the obstacle (H) including its security sector ($R_{RISK}$) is on a collision course with the object (A);
calculating an avoidance path past the obstacle (H), such that the avoidance path runs at least approximately in the shape of a circular path and this avoidance path at least approximately shaped as a circular path is tangent to the security sector ($R_{RISK}$) around the obstacle (H);
calculating a minimum distance of the object (A) from the obstacle (H) required for an avoidance;
piloting the object (A) at the minimal distance to the obstacle (H) required, such that it follows at least approximately the calculated avoidance path, wherein the calculated avoidance path tangentially joins the previous movement of the object,
**characterized in that** the calculation of the avoidance path comprises the following steps:

[A] it is assumed based on the assumption of a tangential contact of the security sector ($R_{RISK}$) around the moving obstacle (H) that the security sector at the exact time ($t_1$) of the contact with the avoidance path is considered immobile,
[B] a line is considered, which results from the prolongation of the vector which is formed by subtracting the speed vector ($v_H$) of the obstacle (H) from the speed vector ($v_i$) of the moving object (A) at the time of said supposed tangential contact,

[C] the length (s) by which the line calculated in step B penetrates as a chord the security sector ($R_{RISK}$) around the obstacle (H) considered immobile at the time ($t_1$) of the contact with the avoidance path is calculated,

[D] iteration of the calculation of step A, wherein however the security sector ($R_{RISK}$) considered immobile is considered increased compared to step A by a circumferential strip, the width of which is equal to the length (s) calculated in step C.

2. The method of claim 1, further comprising:

piloting the object (A), such that, as soon as it passes the tangential point at the security sector around the obstacle (H), it follows a course, which runs in a straight line at least for a determined time and tangentially joins the avoidance path.

3. The method of any of claims 1 or 2, wherein for calculating the avoidance path the speed of the object (A) is considered constant.

4. The method of any of claims 1 to 3, wherein
the calculation of avoidance path comprises:

calculating a first curve (1),

- by subtracting vectorially the simultaneous movement ($v_H$) of the obstacle (H) from the movement of the moving object (A) along a circular arc from the position of the moving object (A) at the beginning (t0) of the avoidance maneuver and
- by calculating a second curve, which is equal to the boundary of the security sector ($R_{RISK}$) around the obstacle (H) at the time of the beginning of the avoidance maneuver, and
- by calculating furthermore the first point on the first curve which has a common tangent with a point on the second curve.

5. The method of one of the preceding claims, wherein the security sector ($R_{RISK}$) around the obstacle (H) is circular.

6. The method of one of the preceding claims, wherein the step D comprises:

calculating an increase s of the radius of the security sector with the help of the formula

$$s = R_{RISK} \cdot \left(1 - \frac{\overrightarrow{v_{it1}} \cdot (\overrightarrow{v_{it1}} - \overrightarrow{v_H})}{|\overrightarrow{v_{it1}}| \cdot |\overrightarrow{v_{it1}} - \overrightarrow{v_H}|}\right),$$

wherein $R_{RISK}$ is the radius of the security sector around the obstacle, $v_{it1}$ the vectorial speed of the vehicle directly after passing the part of the movement shaped as a circular arc and $v_H$ the vectorial speed of the moving obstacle.

7. The method of one of the preceding claims, further comprising:

monitoring constantly the surface sector adjacent to the moving object (A) with the help of an on-board sensor system in order to detect and locate possible obstacles (H).

8. The method of one of the preceding claims, further comprising:

calculating the projection of position and speed ($V_H$) of a detected obstacle (H) in the plane of the movement of the object;
calculating the avoidance path using the projected speed and position.

9. The method of one of the claims 1 to 8, wherein the object (A) is an airplane.

10. The method of one of the claims 1 to 8, wherein the object (A) is a U-boat.

**11.** The method of one of the claims 1 to 8, wherein the object (A) is a spacecraft.

**12.** The method of one of the claims 1 to 8, wherein the object (A) is a ship.

**13.** The method of one of the claims 1 to 8, wherein the object (A) is a land vehicle.

**Revendications**

**1.** Procédé de commande du mouvement d'un objet (A) pour éviter des collisions avec des obstacles (H) ; le procédé comprenant :

la reconnaissance d'au moins un obstacle (H) mouvant ou immobile ;
la définition d'une zone de sécurité ($R_{RISK}$) autour de l'obstacle (H) se déplaçant avec l'obstacle (H) ;
la détection de la présence ou de l'absence de l'obstacle (H) y compris de sa zone de sécurité ($R_{RISK}$) sur une trajectoire de collision avec l'objet (A) ;
le calcul d'une trajectoire d'évitement le long de l'obstacle (H) de façon à ce que la trajectoire d'évitement ait au moins approximativement une forme d'orbite circulaire et que cette trajectoire approximativement en forme d'orbite circulaire soit tangente à la zone de sécurité ($R_{RISK}$) autour de l'obstacle (H) ;
le calcul d'une distance minimale nécessaire pour un évitement de l'objet (A) à l'obstacle (H);
le contrôle de l'objet (A) à la distance minimale nécessaire de l'obstacle (H) de telle façon qu'il suive au moins approximativement le mouvement d'évitement calculé, le mouvement d'évitement calculé rejoignant le mouvement de l'objet effectué jusque-là de manière tangentielle,
**caractérisé en ce que** le calcul de la trajectoire d'évitement comprend les étapes suivantes :

[A] on part du principe, en supposant un contact tangentiel de la zone de sécurité ($R_{RISK}$) autour de l'obstacle (H), que la zone de sécurité est supposée immobile à l'instant ($t_1$) exact du contact avec la trajectoire d'évitement,
[B] on considère une droite qui résulte d'une prolongation du vecteur qui est obtenu par soustraction du vecteur de vitesse ($v_H$) de l'obstacle (H) au vecteur de vitesse ($v_i$) de l'objet en mouvement (A) à l'instant dudit contact tangentiel supposé,
[C] on calcule la longueur (s) avec laquelle la droite calculée à l'étape B pénètre comme une corde dans la zone de sécurité ($R_{RISK}$) autour de l'obstacle (H) supposée immobile à l'instant ($t_1$) du contact avec la trajectoire d'évitement,
[D] l'itération du calcul de l'étape A, la zone de sécurité ($R_{RISK}$) supposée immobile étant considérée comme étant augmentée par rapport à l'étape A d'une bande périphérique dont la largeur est égale à la longueur (s) calculée à l'étape C.

**2.** Procédé selon la revendication 1, qui comprend également :

le contrôle de l'objet (A) de telle façon que, dès qu'il passe le point de tangence à la zone de sécurité autour de l'obstacle (H), il suit une trajectoire qui, au moins pendant une durée déterminée, est en ligne droite et rejoint la trajectoire d'évitement de façon tangentielle.

**3.** Procédé selon l'une des revendications 1 ou 2, dans lequel pour le calcul de la trajectoire d'évitement la vitesse de l'objet (A) est supposée constante.

**4.** Procédé selon l'une des revendications 1 à 3, dans lequel le calcul de la trajectoire d'évitement comprend :

le calcul d'une première courbe (1),

- en soustrayant vectoriellement au mouvement de l'objet mobile (A) le long d'un arc de cercle le mouvement ($v_H$) simultané de l'obstacle (H) à partir de la position de l'objet mobile (A) au début ($t_0$) de la manoeuvre d'évitement et
- en calculant une seconde courbe, laquelle est égale à la frontière de la zone de sécurité ($R_{RISK}$) autour de l'obstacle (H) au moment du début de la manoeuvre d'évitement, et
- en calculant également le premier point se trouvant sur la première courbe qui a une tangente en commun avec un point sur la seconde courbe.

**5.** Procédé selon l'une des revendications précédentes, dans lequel la zone de sécurité ($R_{RISK}$) autour de l'obstacle (H) est circulaire.

**6.** Procédé selon l'une des revendications précédentes, dans lequel l'étape D comprend :

le calcul d'une augmentation s du rayon de la zone de sécurité en utilisant la formule

$$s = R_{RISK} \cdot \left(1 - \frac{\overrightarrow{v_{it1}} \cdot (\overrightarrow{v_{it1}} - \overrightarrow{v_H})}{|\overrightarrow{v_{it1}}| \cdot |\overrightarrow{v_{it1}} - \overrightarrow{v_H}|}\right),$$

dans laquelle $R_{RISK}$ est le rayon de la zone de sécurité autour de l'obstacle, $v_{it1}$ la vitesse vectorielle du véhicule directement après le passage de la portion de mouvement en forme d'arc de cercle et $v_H$ la vitesse vectorielle de l'obstacle en mouvement.

**7.** Procédé selon l'une des revendications précédentes, qui comprend également :

la surveillance constante de la partie de surface adjacente à l'objet en mouvement (A) à l'aide d'un système capteur embarqué afin de découvrir et de localiser d'éventuels obstacles (H).

**8.** Procédé selon l'une des revendications précédentes, qui comprend également :

le calcul de la projection de position et de vitesse ($v_H$) d'un obstacle détecté (H) dans le plan du mouvement de l'objet ;
le calcul de la trajectoire d'évitement en utilisant la vitesse et la position projetées.

**9.** Procédé selon l'une des revendications 1 à 8, dans lequel l'objet (A) est un avion.

**10.** Procédé selon l'une des revendications 1 à 8, dans lequel l'objet (A) est un sous-marin.

**11.** Procédé selon l'une des revendications 1 à 8, dans lequel l'objet (A) est un véhicule spatial.

**12.** Procédé selon l'une des revendications 1 à 8, dans lequel l'objet (A) est un bateau.

**13.** Procédé selon l'une des revendications 1 à 8, dans lequel l'objet (A) est un véhicule terrestre.

# Fig. 1

# Fig. 2

**Fig. 3**

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Formal Verification of an Optimal Air Traffic Conflict Resolution and Recovery Algorithm. **GALDINO, AN-DRÉ L. et al.** WoLLIC, LNCS. Springer Verlag, 2007, vol. 4576, 177-188